# EUROPEAN PATENT APPLICATION

(11) **EP 1 696 615 A1**
(43) Date of publication of application: **30.08.2006**
(21) Application number: 06003917.9
(22) Date of filing: 27.02.2006
(51) Int. Cl.: H04L 12/56, H04Q 7/38

(54) **Transmission rate control method, mobile station, and radio network controller**

(30) Priority: 28.02.2005 JP 2005054956
(71) Applicant: NTT DoCoMo, Inc., Tokyo 100-6150 (JP)
(72) Inventor: Usuda, Masafumi, 11-1-2, Nagatacho Chiyoda-ku Tokyo (JP); Umesh, Anil, 11-1-2, Nagatacho Chiyoda-ku Tokyo (JP); Nakamura, Takehiro, 11-1-2, Nagatacho Chiyoda-ku Tokyo (JP)
(74) Representative: HOFFMANN EITLE

(57) **Abstract**

A transmission rate control method for controlling a transmission rate of uplink user data to be transmitted by a mobile station, based on a maximum allowable transmission rate, include: instructing, at a radio network controller, to change a serving cell of the mobile station, to the mobile station; and controlling, at the mobile station, the maximum allowable transmission rate without following an increase command of the maximum allowable transmission rate which is notified from a current serving cell to which the mobile station is connected, between a timing when the mobile station receives the instruction from the radio network controller and a timing when a change process of changing the serving cell of the mobile station is completed.

## Description

### CROSS REFERENCE TO RELATED APPLICATION

This application is based upon and claims the benefit of priority from the prior Japanese Patent Application No. P2005-054956, filed on February 28, 2005; the entire contents of which are incorporated herein by reference.

### BACKGROUND OF THE INVENTION

### 1. Field of the Invention

The present invention relates to a transmission rate control method for controlling a transmission rate of user data to be transmitted by a mobile station via an uplink, based on a maximum allowable transmission rate, the mobile station, and a radio network controller.

### 2.Description of the Related Art

In a conventional mobile communication system, in an uplink from a mobile station UE to a radio base station Node B, a radio network controller RNC is configured to determine a transmission rate of a dedicated channel, in consideration of radio resources of the radio base station Node B, an interference volume in an uplink, transmission power of the mobile station UE, transmission processing performance of the mobile station UE, a transmission rate required for an upper application, and the like, and to notify the determined transmission rate of the dedicated channel by a message of a layer-3 (Radio Resource Control Layer) to both of the mobile station UE and the radio base station Node B.

Here, the radio network controller RNC is provided at an upper level of the radio base station Node B, and is an apparatus configured to control the radio base station Node B and the mobile station UE.

In general, data communications often cause burst traffic compared with voice communications or TV communications. Therefore, it is preferable that a transmission rate of a channel used for the data communications is changed fast.

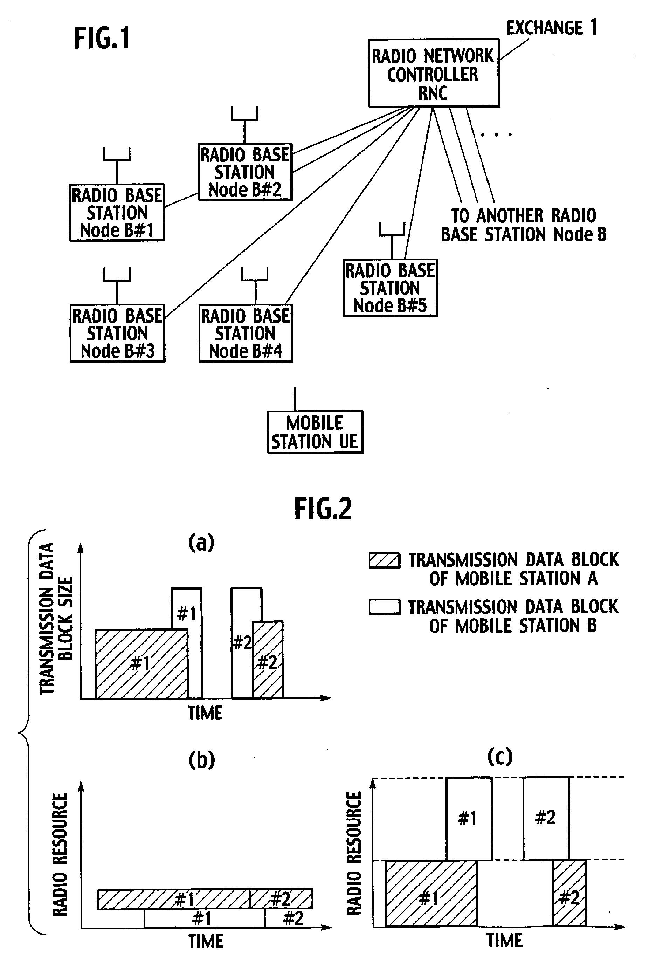

However, as shown in FIG. 1, the radio network controller RNC integrally controls a plurality of radio base stations Node B in general. Therefore, in the conventional mobile communication system, there has been a problem that it is difficult to perform fast control for changing of the transmission rate of channel (for example, per approximately 1 through 100 ms), due to processing load, processing delay, or the like.

In addition, in the conventional radio network controller RNC, there has been also a problem that costs for implementing an apparatus and for operating a network are substantially increased even if the fast control for changing of the transmission rate of the channel can be performed.

Therefore, in the conventional mobile communication system, control for changing of the transmission rate of the channel is generally performed on the order from a few hundred ms to a few seconds.

Accordingly, in the conventional mobile communication system, when burst data is generated as shown in FIG. 2 (a), the data are transmitted by accepting low-speed, high-delay, and low-transmission efficiency as shown in FIG. 2 (b), or, as shown in FIG. 2(c), by reserving radio resources for high-speed communications to accept that radio bandwidth resources in an unoccupied state and hardware resources in the radio base station Node B are wasted.

It should be noted that both of the above-described radio bandwidth resources and hardware resources are applied to the vertical radio resources in FIGS. 2B and 2C.

Therefore, the 3rd Generation Partnership Project (3GPP) and the 3rd Generation Partnership Project 2 (3GPP2), which are international standardization organizations of the third generation mobile communication system, have discussed a method for controlling radio resources at high speed in a layer-1 and a media access control (MAC) sub-layer (a layer-2) between the radio base station Node B and the mobile station UE, so as to utilize the radio resources effectively. Such discussions or discussed functions will be hereinafter referred to as "Enhanced Uplink (EUL)".

Radio resource control methods that have been discussed in the "Enhanced Uplink" can be broadly categorized into three as follows. The radio resource control methods will be briefly described below.

First, a radio resource control method that is referred to as "Time Rate Control" has been discussed.

In such a radio resource control method, a radio base station Node B determines a mobile station UE permitting transmission of user data and a transmission rate of user data per a predetermined timing, so as to signal information relating to a mobile station ID as well as the transmission rate of user data (or a maximum allowable transmission rate of user data).

The mobile station UE that is designated by the radio base station Node B transmits user data at the predetermined timing and the transmission rate (or within a range of the maximum allowable transmission rate).

Second, a radio resource control method that is referred to as "Rate Control per UE" has been discussed.

In such a radio resource control method, if there is user data that should be transmitted to the radio base station Node B, each mobile station UE can transmit the user data. However, the maximum allowable transmission rate of the user data, which is determined by the radio base station Node B and signaled to each mobile station UE, is used for each transmission frame or each of a plurality of transmission frames.

Here, when the maximum allowable transmission rate is signaled, the radio base station Node B signals the maximum allowable transmission rate itself at this timing, or a relative value thereof (for example, binary of Up command and Down command).

Third, a radio resource control method that is referred to as "Rate Control per Cell" has been discussed.

In such a radio resource control method, a radio base station Node B broadcasts a transmission rate of user data, which is common among mobile stations UE in communication, or information needed to calculate the transmission rate, and each mobile station UE determines a transmission rate of user data based on the received information.

Ideally, the "Time & Rate Control", and the "Rate Control per UE" can be the best control methods for improving radio capacity in an uplink. However, a transmission rate of user data has to be granted after data volume stored in buffers of the mobile station UE, transmission power in the mobile station UE, or the like are grasped. Therefore, there has been a problem that control load is increased by the radio base station Node B.

In addition, in these radio resource control methods, there has been a problem that overhead becomes larger by exchanges of control signals.

On the other hand, in the "Rate Control per Cell", there is an advantage in that control load by the radio base station Node B is small since the radio base station Node B broadcasts information which is common in cells, and each mobile station UE autonomously seeks the transmission rate of user data based on the received information.

However, the radio base station Node B has to be configured in such a manner that the user data in the uplink from any mobile station UE can be received. Therefore, there has been a problem that an apparatus size of radio base station Node B becomes large to effectively utilize the radio capacity of the uplink.

Accordingly, there has been proposed, for example, a scheme (Autonomous ramping method) that the mobile station UE increases the transmission rate of user data from a pre-notified initial transmission rate in accordance with predetermined rules so that excessive allocation of radio capacity by the radio base station Node B can be prevented, thereby preventing increase of the apparatus size of radio base station Node B (See, Non-Patent literature 1: 3GPP TSG-RAN R1-040773).

In such a scheme, a radio base station Node B determines a maximum allowable transmission rate based on hardware resources and radio bandwidth resources (for example, an interference volume in an uplink) in each cell, so as to control the transmission rate of user data in communicating mobile stations UE. Detailed descriptions of a control scheme based on hardware resources and a control scheme based on an interference volume in an uplink will be given below.

In the control scheme based on the hardware resources, a radio base station Node B is configured to broadcast a maximum allowable transmission rate to a mobile station UE connected to a cell under the control thereof.

The radio base station Node B lowers the maximum allowable transmission rate so as to avoid shortage of the hardware resources when the transmission rate of user data in the mobile station UE connected to the cell under the control thereof is increased and the hardware resources are insufficient.

On the other hand, the radio base station Node B again increases the maximum allowable transmission rate when the space of the hardware resources become larger at a time of completion of user data transmission in the mobile station UE connected to the cell under the control thereof, or the like.

In addition, in the control scheme based on the interference volume in the uplink, a radio base station Node B is configured to broadcast a maximum allowable transmission rate to a mobile station UE connected to a cell under the control thereof.

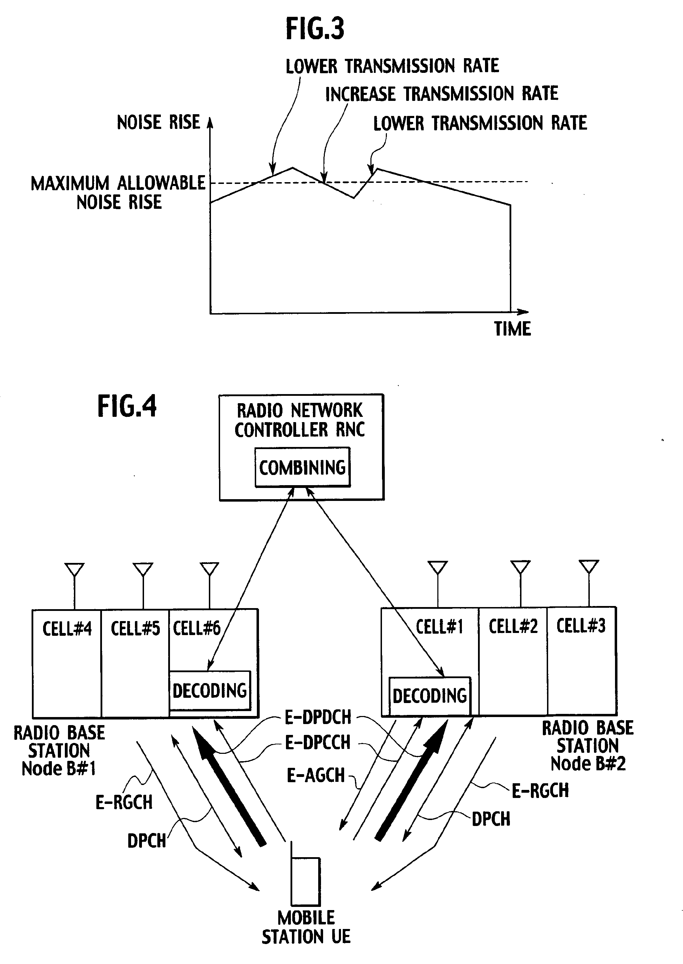

When the transmission rate of user data in the mobile station UE connected to the cell under the control of a radio base station Node B increases and a measured interference volume (for example, a measured noise rise) in the uplink exceeds an allowable value (for example, a maximum allowable noise rise), the radio base station Node B lowers the maximum allowable transmission rate so that the interference volume in the uplink can be within a range of the allowable value (see, FIG. 3).

On the other hand, when the interference volume (for example, the noise rise) in the uplink is within a range of the allowable value (for example, the maximum allowable noise rise), thereby having a space, at the time of completion of user data transmission in the mobile station UE connected to the cell under the control of the radio base station Node B, or the like, the radio base station Node B again increases the maximum allowable transmission rate (see, FIG. 3).

In the "Enhanced Uplink (EUL)", the concept named "serving cell (or serving cell set)" exists. An example for an aspect of channel connection in the mobile communication system using the EUL is shown in FIG. 4.

Here, in the EUL, an "Enhanced Dedicated Physical Channel (E-DPCH)" is a channel configured to signal user data using an HARQ processing or a scheduling processing.

An "Enhanced Dedicated Physical Data Channel (E-DPDCH)" is a channel configured to signal an uplink user data, and an "Enhanced Dedicated Physical Control Channel (E-DPCCH)" is a channel configured to signal an uplink control data.

In addition, in this mobile communication system, not only the E-DPCH but also the conventional "Dedicated Physical Channel (DPCH)" is transmitted. It is suggested the DPCH is configured to signal layer-3 control information (layer-3 message) between core networks and the mobile station UE.

In addition, in this mobile communication system, a cell #1 is configured to transmit an "E-DCH Absolute Grant Channel (E-AGCH)" to the mobile station UE. The E-AGCH is a channel for signaling a maximum allowable transmission rate of uplink user data (or an absolute value of the maximum allowable transmission rate of uplink user data) .

The mobile station UE receives the E-AGCH, which is transmitted from only one cell, all the time. The cell, which transmits the E-AGCH to be received by the mobile station UE, is called the "serving cell" of the mobile station UE, and other cells (e.g. cell #2), which belong to the same radio base station Node B #2 as the serving cell, are called the "serving cell set" of the mobile station UE.

The transmission rate of uplink user data in the mobile station UE is controlled by the serving cell, so that a radio network controller RNC normally chooses the cell with the highest electric intensity in the downlink or the uplink as for the serving cell. Here, a change process of changing the serving cell of the mobile station UE is called "serving cell change".

Further, in this mobile communication system, the serving cell (cell #1) or "non-serving cell" which belong to the other radio base station Node B (i.e., Node B #1) than the serving cell are configured to transmit an "E-DCH Relative Grant Channel (E-RGCH)" to the mobile station UE. The E-RGCH is a channel for signaling a relative value in order to change the maximum allowable transmission rate of uplink user data.

The relative value of the maximum allowable transmission rate signaled by the E-RGCH, which is transmitted from the serving cell, includes three values (Up Command/ Down Command/ Hold Command). The relative value of the maximum allowable transmission rate signaled by the E-RGCH, which is transmitted from the non-serving cell, includes two values (Hold Command/ Down Command).

However, in the conventional mobile communication system, there has been a problem that the shortage of processing resource or the failure of receiving the uplink user data will be happen in a newly connected cell after the serving cell change, when the maximum allowable transmission rate of uplink user data is increased by the "Up Command" included in the E-RGCH from the serving cell, during the serving cell change (or during the change process of changing the serving cell).

### BRIEF SUMMARY OF THE INVENTION

The present invention has been made considering the problems, and its object is to provide a transmission rate control method, a mobile station and a radio network controller, which enable to prevent deterioration of radio communication quality by the shortage of radio resource in the changed serving cell even when the serving cell change is performed.

A first aspect of the present invention is summarized as a transmission rate control method for controlling a transmission rate of uplink user data transmitted by a mobile station, based on a maximum allowable transmission rate, including: instructing, at a radio network controller, to change a serving cell of the mobile station, to the mobile station; and controlling, at the mobile station, the maximum allowable transmission rate without following an increase command of the maximum allowable transmission rate which is notified from a current serving cell to which the mobile station is connected, between a timing when the mobile station receives the instruction from the radio network controller and a timing when a change process of changing the serving cell of the mobile station is completed.

In the first aspect, the transmission rate control method can further include: notifying, at the radio network controller, a serving cell change maximum allowable transmission rate to be used during the change process, to the mobile station, by using a layer-3 message; controlling, at the mobile station, the transmission rate of uplink user data based on the serving cell change maximum allowable transmission rate, between the timing when the mobile station receives the instruction from the radio network controller and the timing when the change process is completed; and resuming the control of the transmission rate of uplink user data based on the maximum allowable transmission rate which is notified from a changed serving cell to which the mobile station is newly connected, when the change process is completed.

In the first aspect, the radio network controller can notify a timing of changing the serving cell of the mobile station as well as the instruction to change the serving cell of the mobile station, to the mobile station.

A second aspect of the present invention is summarized as a mobile station for controlling a transmission rate of uplink user data based on a maximum allowable transmission rate, including: a maximum allowable transmission rate control section configured to control the maximum allowable transmission rate without following an increase Command of the maximum allowable transmission rate which is notified from a current serving cell to which the mobile station is connected, between a timing when the mobile station receives the instruction from the radio network controller and a timing when a change process of changing the serving cell of the mobile station is completed.

In the second aspect, the mobile station can include: a transmission rate control section configured to control the transmission rate of uplink user data based on a serving cell change maximum allowable transmission rate to be used during the change process, the serving cell change maximum allowable transmission rate being notified from the radio network controller using a layer-3 message, between the timing when the mobile station receives the instruction from the radio network controller and the timing when a change process of changing the serving cell of the mobile station is completed, and to resume the transmission rate of uplink user data based on an increase Command of maximum allowable transmission rate which is notified from a changed serving cell to which the mobile station is newly connected, when the change process is completed.

In the second aspect, the maximum allowable transmission rate control section can be configured to receive a timing of changing the serving cell of the mobile station as well as the instruction to change the serving cell of the mobile station, from the radio network controller.

A third aspect of the present invention is summarized as a radio network controller used in a transmission rate control method for controlling a transmission rate of uplink user data to be transmitted by a mobile station, based on a maximum allowable transmission rate, including: a maximum allowable transmission rate notification section configured to notify a serving cell change maximum allowable transmission rate to be used during a change process of changing the serving cell of the mobile station, to the mobile station by using a layer-3 message.

### BRIEF DESCRIPTION OF THE SEVERAL VIEWS OF THE DRAWINGS

FIG. 1 is diagram of an entire configuration of a general mobile communication system.
FIGs. 2 (a) to 2 (c) are graphs illustrating operations at the time of burst data transmission in a conventional mobile communication system.
FIG. 3 is a graph illustrating operations at the time of controlling transmission rate in an uplink in the conventional mobile communication system.
FIG. 4 is a graph showing channel connections in the conventional mobile communication system which is applied an Enhance Uplink.
FIG. 5 is a functional block diagram of a mobile station in the mobile communication system according to an embodiment of the present invention.
FIG. 6 is a functional block diagram of a baseband signal processing section of the mobile station in the mobile communication system according to the embodiment of the present invention.
FIG. 7 is a functional block diagram of a MAC-e processing section of the baseband signal processing section in the mobile station of the mobile communication system according to the embodiment of the present invention.
FIG. 8 is a functional block diagram of a radio base station of the mobile communication system according to the embodiment of the present invention.
FIG. 9 is a functional block diagram of the baseband processing section in the radio base station of the mobile communication system according to the embodiment of the present invention.
FIG. 10 is a functional block diagram of the MAC-e and layer-1 processing section (configured for an uplink) in the baseband signal processing section in the radio base station of the communication system according to the embodiment of the present invention.
FIG. 11 is a functional block diagram of a MAC-e functional section of the MAC-e and layer-1 processing section (configured for the uplink) in the baseband signal processing section in the radio base station of the mobile communication system according to the embodiment of the present invention.
FIG. 12 is a functional block diagram of a radio network controller of the mobile communication system according to the embodiment of the present invention.
FIG. 13 is a sequence diagram showing operations of the mobile communication system according to the embodiment of the present invention.

### DETAILED DESCRIPTION OF THE INVENTION

### (Configuration of Mobile Communication System According to First Embodiment of the Present Invention)

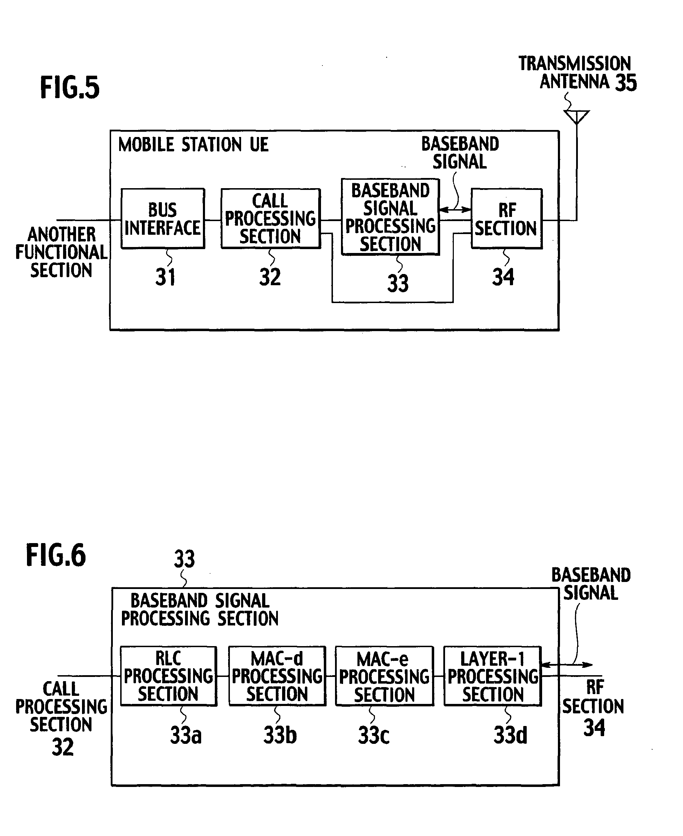

Referring to FIGs. 5 to 12, a configuration of a mobile communication system according to a first embodiment of the present invention will be described.

It should be noted that, as shown in FIG. 2, the mobile communication system according to this embodiment is provided with a plurality of radio base stations Node B #1 to Node B #5 and a radio network controller RNC.

The mobile communication system according to this embodiment is configured to control a transmission rate of user data that is transmitted by a mobile station UE via an uplink.

In addition, in the mobile communication system according to this embodiment, a "High Speed Downlink Packet Access (HSDPA)" is used in a downlink, and an "Enhanced Uplink (EUL) is used in an uplink.

It should be noted that in both of the HSDPA and the EUL, retransmission control (N process stop and wait) shall be performed by a "Hybrid Automatic Repeat Request (HARQ)".

Therefore, in an uplink, an "Enhanced Dedicated Physical Channel (E-DPCH) " configured of an "Enhanced Dedicated Physical Data Channel (E-DPDCH)" and an "Enhanced Dedicated Physical Control Channel (E-DPCCH)", and a "Dedicated Physical Channel (DPCH)" configured of a "Dedicated Physical Date Channel (DPDCH)" and a "Dedicated Physical Control Channel (DPCCH)" are used.

Here, the E-DPCCH transmits control data for the EUL such as a transmission format number for defining a transmission format (transmission block size, or the like) of the EDPDCH, HARQ related information (the number of retransmission, or the like), and scheduling related information (transmission power, buffer residence-volume, or the like in the mobile station UE).

In addition, the E-DPDCH is paired with the E-DPCCH, and transmits user data for the mobile station UE based on the control data for the EUL transmitted through the E-DPCCH.

The DPCCH transmits control data such as a pilot symbol that is used for RAKE combining, SIR measurement, or the like, a Transport Format Combination Indicator (TFCI) for identifying a transmission format of uplink DPDCH, and a downlink power control bit in a downlink.

In addition, the DPDCH is paired with the DPCCH, and transmits user data for the mobile station UE based on the control data transmitted through the DPCCH. However, if user data that should be transmitted does not exist in the mobile station UE, the DPDCH can be configured not to be transmitted.

In addition, in the uplink, a "High Speed Dedicated Physical Control Channel (HS-DPCCH) ", which is needed when the HSPDA is applied, are also used.

The HS-DPCCH transmits a Channel Quality Indicator (CQI) measured on the downlink and an acknowledge signal (Ack or Nack) for the HSDPA.

As shown in FIG. 5, the mobile station UE according to this embodiment is provided with a bus interface 31, a call processing section 32, a baseband processing section 33, a radio frequency (RF) section 34, and a transmission - reception antenna 35.

However, these functions can be independently present as hardware, and can be partly or entirely integrated, or can be configured through a process of software.

The bus interface 31 is configured to forward the user data output from the call processing section 32 to another functional section (for example, an application related functional section). In addition, the bus interface 31 is configured to forward the user data transmitted from another functional section (for example, the application related functional section) to the call processing section 32.

The call processing section 32 is configured to perform a call control processing for transmitting and receiving the user data.

The baseband signal processing section 33 is configured to transmit the user data to the call processing section 32, the user data acquired by performing, against the baseband signals transmitted from the RF section 34, a layer-1 processing including a despreading processing, a RAKE combining processing, and a "Forward Error Correction (FEC)" decode processing, a "Media Access Control (MAC)" processing including a MAC-e processing and a MAC-d processing, and a "Radio Link Control (RLC)" processing.

In addition, the baseband signal processing section 33 is configured to generate the baseband signals by performing the RLC processing, the MAC processing, or the layer-1 processing against the user data transmitted from the call processing section 32 so as to transmit the baseband signals to the RF section 34.

Detailed description of the functions of the baseband signal processing section 33 will be given later.

The RF section 34 is configured to generate baseband signals by performing the detection processing, the filtering processing, the quantization processing, or the like against radio frequency signals received through the transmission - reception antenna 35, so as to transmit the generated baseband signals to the baseband signal processing section 33.

In addition, the RF section 34 is configured to convert the baseband signals transmitted from the baseband signal processing section 33 to the radio frequency signals.

As shown in FIG. 6, the baseband signal processing section 33 is provided with a RLC processing section 33a, a MAC-d processing section 33b, a MAC-e processing section 33c, and a layer-1 processing section 33d.

The RLC processing section 33a is configured to transmit, to the MAC-d processing section 33b, the user data transmitted from the call processing section 32 by performing a processing (RLC processing) in an upper layer of a layer-2 against the user data.

The MAC-d processing section 33b is configured to create a transmission format in the uplink by granting a channel identifier header based on the limitation of transmission power.

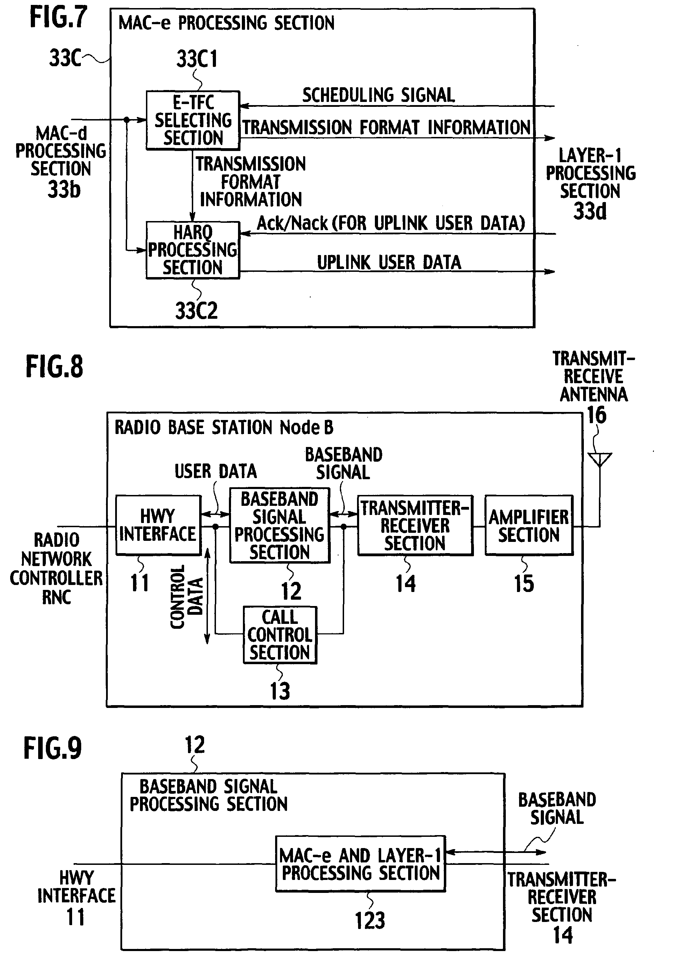

As shown in FIG. 7, the MAC-e processing section 33c is provided with an Enhanced Transport Format Combination (E-TFC) selecting section 33c1 and an HARQ processing section 33c2.

The E-TFC selecting section 33c1 is configured to determine a transmission format (E-TFC) of the E-DPDCH, based on scheduling signals transmitted from the radio base station Node B.

In addition, the E-TFC selecting section 33c1 is configured to transmit transmission format information on the determined transmission format (that is, a transmission data block size, an transmission power ratio between the E-DPDCH and the DPCCH, or the like) to the layer-1 processing section 33d, and also to transmit the determined transmission data block size or the transmission power ratio to the HARQ processing section 33c2.

Here, the scheduling signals include the maximum allowable transmission rate of user data in the mobile station UE (for example, the block size of maximum allowable transmission data, a maximum value of the transmission power ratio between the E-DPDCH and the DPCCH (maximum allowable transmission power ratio), or the like), or a parameter relating to the maximum allowable transmission rate.

Unless particularly described in this specification, the maximum allowable transmission rate includes a parameter relating to the maximum allowable transmission rate.

Such a scheduling signal is information that is broadcasted in the cell where the mobile station UE visits, and includes control information for all the mobile stations visiting the cell, or a specific group of the mobile stations visiting the cell.

Here, the E-TFC selecting section 33c1 is configured to control the transmission rate of user data in the uplink based on the maximum allowable transmission rate notified by the scheduling signals from the radio base station Node B.

For example, the E-TFC selecting section 33cl can be configured to increase the transmission rate of user data in the uplink up to the maximum allowable transmission rate notified by the scheduling signals from the radio base station Node B.

Also, the E-TFC selecting section 33cl can be configured to transmit user data in the uplink, with the maximum allowable transmission rate notified by the scheduling signals from the radio base station Node B.

Normally, the E-TFC selecting section 33cl is configured to control the maximum allowable transmission rate based on the absolute value of the maximum allowable transmission rate included in the E-AGCH which is transmitted from the serving cell and the relative value of the maximum allowable transmission rate included in the E-RGCH which is transmitted from the serving cell or the non-serving cell.

The E-TFC selecting section 33c1 is configured to control the maximum allowable transmission rate without following the "Up Command" (the increase command of the maximum allowable transmission rate) which is the relative value of the maximum allowable transmission rate included in the E-RGCH which is transmitted from the current serving cell connecting to the mobile station UE, between a timing when the mobile station receives the instruction to change the serving cell of the mobile station UE (i.e., an instruction for serving cell change) from the radio network controller and a timing when a change process of changing the serving cell of the mobile station is completed.

In addition, the E-TFC selection section 33c1 can be configured to receive the timing for serving cell change of the mobile station UE as well as the instruction, from the radio network controller RNC.

In addition, the E-TFC selection section 33c1 is configured to control the transmission rate of user data based on a serving cell change maximum allowable transmission rate to be used during the serving cell change, which is notified by the radio network controller RNC using the layer-3 message, during the serving cell change (i.e., between a timing when the mobile station receives the instruction to change the serving cell of the mobile station UE from the radio network controller and a timing when a change process of changing the serving cell of the mobile station is completed).

For example, the E-TFC selection section 33c1 can be configured to increase the transmission rate of user data up to the serving cell change maximum allowable transmission rate, during the serving cell change.

Also, the E-TFC selection section 33c1 can be configured to transmit user data with the serving cell change maximum allowable transmission rate, during the serving cell change.

Then, the E-TFC selecting section 33c1 is configured to resume the control of the transmission rate of uplink user data based on the maximum allowable transmission rate which is notified from a changed serving cell to which the mobile station is newly connected, when the change process (serving cell change) of the mobile station UE is completed.

Here, the E-TFC selecting section 33c1 can be configured to control the above maximum allowable transmission rate with following a "Down Command" (a decrease command of the maximum allowable transmission rate) which is a relative value of the maximum allowable transmission rate included in the E-RGCH which is notified from the current serving cell connecting to the mobile station UE, an absolute value of the maximum allowable transmission rate included in the E-AGCH which is notified from the current serving cell, and an "Hold/Down Command" (a hold/decrease command of the maximum allowable transmission rate) which is a relative value of the maximum allowable transmission rate included in the E-RGCH which is notified from the current non-serving cell connecting to the mobile station UE.

The HARQ processing section 33c2 is configured to perform process control for the "N process stop and wait", so as to transmit the uplink user data based on an acknowledge signal (Ack/Nack for uplink data) to be transmitted from the radio base station Node B.

Specifically, the HARQ 33c2 is configured to determine whether or not the receive processing of uplink user data by the radio base station Node B has been successful based on the acknowledge signal (Ack/Nack for uplink data) to be transmitted by the radio base station Node B.

Then, the HARQ processing section 33c2 is configured to transmit new data on the HARQ process if the received acknowledge signal to the HARQ process from the radio base station Node B was an Ack (data was successfully received), or to retransmit data on the HARQ process if the received acknowledge signal to the HARQ process from the radio base station Node B was an Nack (data was not successfully received) .

As shown in FIG. 8, the radio base station Node B according to this embodiment is provided with an HWY interface 11, a baseband signal processing section 12, a call control section 13, at least one transmitter-receiver section 14, at least one amplifier section 15, and at least one transmission - reception antenna 16.

The HWY interface 11 is an interface with a radio network controller RNC. Specifically, the HWY interface 11 is configured to receive user data transmitted from the radio network controller RNC to a mobile station UE via a downlink, so as to enter the user data to the baseband signal processing section 12.

In addition, the HWY interface 11 is configured to receive control data for the radio base station Node B from the radio network controller RNC, so as to enter the received control data to the call control section 13.

In addition, the HWY interface 11 is configured to acquire, from the baseband signal processing section 12, the user data included in the uplink signals which are transmitted from a mobile station UE via an uplink, so as to transmit the acquired user data to the radio network controller RNC.

Further, the HWY interface 11 is configured to acquire the control data for the radio network controller RNC from the call control section 13, so as to transmit the acquired control data to the radio network controller RNC.

The baseband signal processing section 12 is configured to generate baseband signals by performing the MAC-e processing and the layer-1 processing against the downlink user data acquired from the HWY interface 11, so as to forward the generated baseband signals to the transmitter-receiver section 14.

Here, the MAC-e processing in the downlink includes an HARQ processing, a scheduling processing, a transmission rate control processing, or the like.

In addition, the layer-1 processing includes a channel coding processing of user data, a spreading processing, or the like.

In addition, the baseband signal processing section 12 is configured to extract the uplink user data by performing the layer-1 processing and the MAC-e processing against the baseband signals acquired from the transmitter-receiver section 14, so as to forward the extracted user data to the HWY interface 11.

Here, the MAC-e processing in the uplink includes the HARQ processing, the scheduling processing, the transmission rate control processing, a header disposal processing, or the like.

In addition, the layer-1 processing in the uplink includes the despreading processing, the RAKE combining processing, the error correction decode processing, or the like.

Detailed description of the functions of the baseband signal processing section 12 will be given later.

In addition, the call control section 13 is configured to perform the call control processing, based on the control data acquired from the HWY interface 11.

The transmitter-receiver section 14 is configured to perform processing of converting baseband signals, which are acquired from the baseband signal processing section 12, to radio frequency signals (downlink signals), so as to transmit the baseband signals to the amplifier section 15.

In addition, the transmitter-receiver 14 is configured to perform processing of converting the radio frequency signals (uplink signals), which are acquired from the amplifier section 15, to the baseband signals, so as to transmit the radio frequency signals to the baseband signal processing section 12.

The amplifier section 15 is configured to amplify the downlink signals acquired from the transmitter-receiver section 14, so as to transmit the amplified downlink signals to the mobile station UE via the transmission - reception antenna 16.

In addition, the amplifier 15 is configured to amplify the uplink signals received by the transmission - reception antenna 16, so as to transmit the amplified uplink signals to the transmitter-receiver section 14.

As shown in FIG. 9, the baseband signal processing section 12 is provided with a MAC-e and first layer processing section 123.

The MAC-e and layer-1 processing section 123 is configured to perform, against the baseband signals acquired from the transmitter-receiver section 14, the despreading processing, the RAKE combining processing, the error correction decode processing, the HARQ processing, or the like.

However, these functions are not clearly divided per hardware, and can be obtained by software.

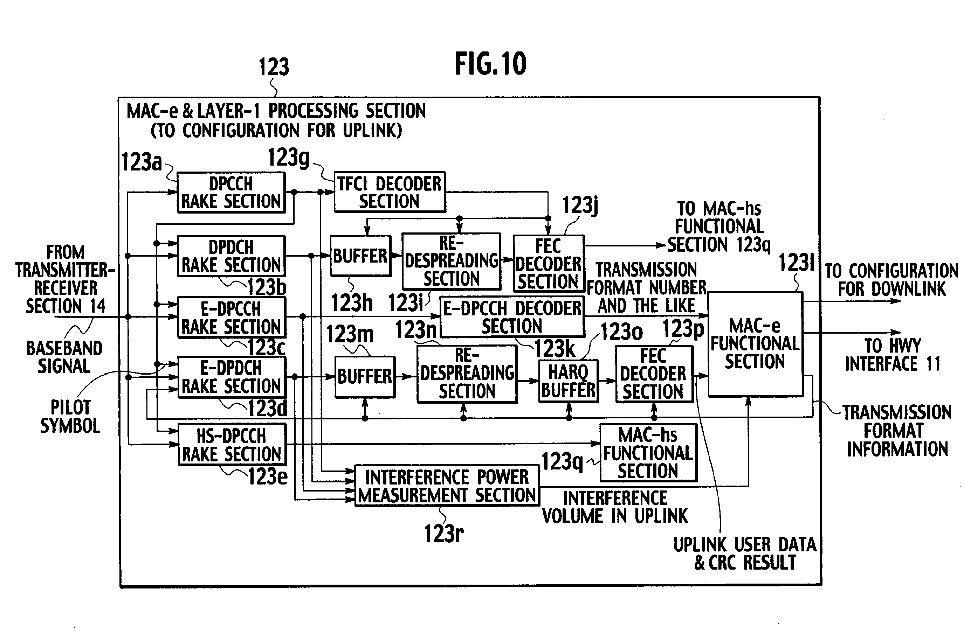

As shown in FIG. 10, the MAC-e and layer-1 processing section (configuration for the uplink) 123 is provided with a DPCCH RAKE section 123a, a DPDCH RAKE section 123b, an E-DPCCH RAKE section 123c, an E-DPDCH RAKE section 123d, an HS-DPCCH RAKE section 123e, a Transport Format Combination Indicator (TFCI) decoder section 123g, buffers 123h and 123m, re-despreading sections 123i and 123n, FEC decoder sections 123j and 123p, an E-DPCCH decoder section 123k, a MAC-e functional section 1231, an HARQ buffer 123o, a MAC-hs functional section 123q, and an interference power measurement section 123r.

The E-DPCCH RAKE section 123c is configured to perform, against the E-DPCCH in the baseband signals transmitted from the transmitter-receiver section 14, the despreading processing and the RAKE combining processing using a pilot symbol included in the DPCCH.

The E-DPCCH decoder section 123k is configured to acquire transmission format number related information, HARQ related information, scheduling related information, or the like, by performing the decode processing against the RAKE combining outputs of the E-DPCCH RAKE section 123c, so as to enter the information to the MAC-e functional section 1231.

The E-DPDCH RAKE section 123d is configured to perform, against the E-DPDCH in the baseband signals transmitted from the transmitter-receiver section 14, the despreading processing using the transmission format information (number of codes) transmitted from the NIAC-e functional section 1231 and the RAKE combining processing using the pilot symbol included in the DPCCH.

The buffer 123m is configured to store the RAKE combining outputs of the E-DPDCH RAKE section 123d based on the transmission format information (number of symbols) transmitted from the MAC-e functional section 1231.

The re-despreading section 123n is configured to perform the despreading processing against the RAKE combining outputs of the E-DPDCH RAKE section 123d, based on the transmission format information (spreading factor) transmitted from the MAC-e functional section 1231.

The HARQ buffer 123o is configured to store the despreading processing outputs of the re-despreading section 123n, based on the transmission format information transmitted from the MAC-e functional section 1231.

The FEC decoder section 123p is configured to perform an error correction decoding processing (the FEC decoding processing) against the despreading processing outputs of the re-despreading section 123n, which is stored in the HARQ buffer 123o, based on the transmission format information (transmission data block size) transmitted from the MAC-e functional section 1231.

The interference power measurement section 123r is configured to measure an interference volume (noise rise) in the uplink such as interference power by a serving mobile station UE for which a cell under the control of the radio base station Node B serves as a serving cell, and the entire interference power.

Here, the noise rise is a ratio between the interference power in a predetermined channel within a predetermined frequency and noise power (thermal noise power or noise power from the outside of the mobile communication system) within the predetermined frequency (i.e., a receiving level from a noise floor) .

In other words, the noise rise is a received interference power offset that a receiving level in communication has against a receiving level (noise floor) in non-communication.

The MAC-e functional section 1231 is configured to calculate and output the transmission format information (number of codes, number of symbols, spreading factor, transmission data block size, and the like) based on the transmission format number related information, the HARQ related information, the scheduling related information, and the like, which are acquired from the E-DPCCH decoder section 123k.

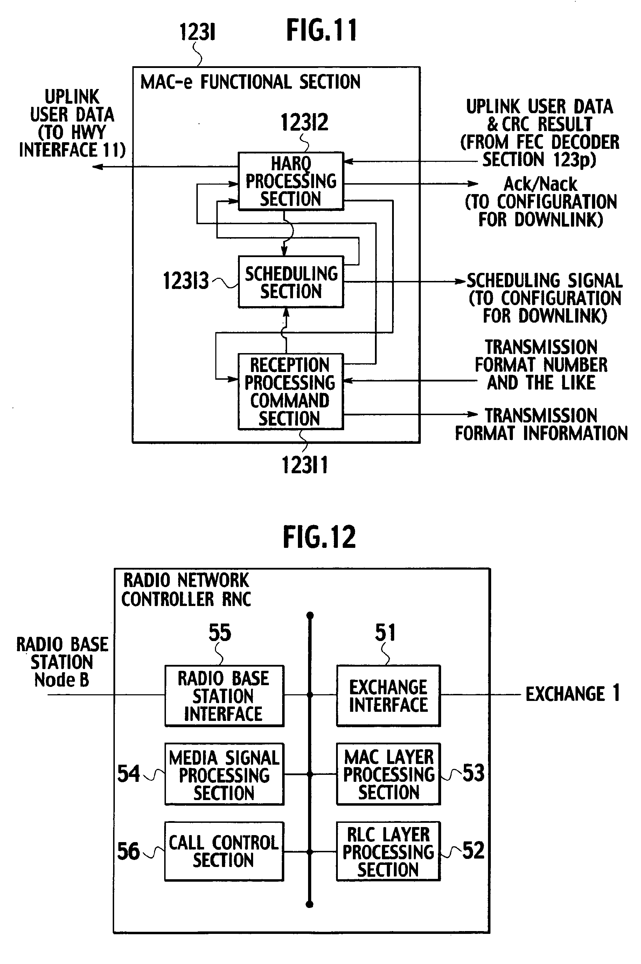

In addition, as shown in FIG. 11, the MAC-e functional section 1231 is provided with a receive processing command section 12311, an HARQ processing section 12312, and a scheduling section 12313.

The receive processing command section 12311 is configured to transmit the transmission format number related information, the HARQ related information, and the scheduling related information, which are entered from the E-DPCCH decoder section 123, to the HARQ processing section 12312.

In addition, the receive processing command section 12311 is configured to transmit, to the scheduling section 12313, the scheduling related information entered form the E-DPCCH decoder 123k.

Further, the receive processing command section 12311 is configured to output the transmission format information corresponding to the transmission format number entered from the E-DPCCH decoder section 123k.

The HARQ processing section 12312 is configured to determine whether or not the receive processing of uplink user data has been successful, based on the CRC result entered from the FEC decoder section 123p.

Then, the HARQ processing section 12312 is configured to generate a transmission acknowledge signal (Ack or Nack), based on the determination result, so as to transmit the generated transmission acknowledge signal to the configuration for the downlink of the baseband signal processing section 12.

In addition, the HARQ processing section 12312 is configured to transmit the uplink user data entered from the FEC decoder section 123p to the radio network controller RNC, when the above determination result has been successful.

In addition, the HARQ processing section 12312 is configured to clear soft decision values stored in the HARQ buffer 123o, when the above determination result has been successful.

On the other hand, the HARQ processing section 12312 is configured to store, in the HARQ buffer 123o, the uplink user data, when the above determination result has not been successful.

In addition, the HARQ processing section 12312 is configured to forward the above determination result to the receive processing command section 12311.

The receive processing control command section 12311 is configured to notify the E-DPDCH RAKE section 123d and the buffer 123m of an hardware resource that should be prepared for the following transmission time interval (TTI), so as to perform notification for reserving the resource in the HARQ buffer 123o.

In addition, when the uplink user data per TTI is stored in the buffer 123m, the receive processing command section 12311 is configured to designate the HARQ buffer 123o and the FEC decoder section 123p to perform the FEC decoding processing after adding the uplink user data, which is stored in the HARQ buffer 123o, in a process corresponding to the TTI and a newly received uplink user data.

In addition, the scheduling section 12313 is configured to designate the configuration for the downlink of the baseband signal processing section 12 so as to transmit the scheduling signals including the maximum allowable transmission rate (maximum allowable transmission data block size, maximum allowable transmission power ratio, or the like), based on radio resources in the uplink of the radio base station Node B, interference volume (noise rise) in the uplink, or the like.

Specifically, the scheduling section 12313 is configured to determine the maximum allowable transmission rate based on the scheduling related information (radio resources in the uplink) transmitted from the E-DOCCH decoder section 123k or the interference volume in the uplink transmitted from the interference power measurement section 123r, so as to control the transmission rate of uplink user data in a communicating mobile station in communication.

Detailed descriptions of a control method based on the hardware resources and a control method based on the interference volume in the uplink will be given below.

In the control method based on the hardware resources, the scheduling section 12313 is configured to broadcast the maximum allowable transmission rate through the E-AGCH to the mobile station UE connected to a cell under the control of the radio base station Node B.

When the transmission rate of uplink user data in the mobile station UE connected to the cell under the control of the radio base station Node B increases and the hardware resources becomes insufficient, the scheduling section 12313 lowers the maximum allowable transmission rate so that shortage of the hardware resources will not be caused.

On the other hand, when the hardware resources have spaces in such a case when transmission of the uplink user data in the mobile station UE connected to the cell under the control of the radio base station Node B is completed, or the like, the scheduling section 12313 again increases the maximum allowable transmission rate.

In addition, in the control method based on the interference volume in the uplink, the scheduling section 12313 is configured to broadcast the maximum allowable transmission rate through the E-AGCH to the mobile station UE connected to the cell under the control of the radio base station Node B.

When the transmission rate of uplink user data in the mobile station UE connected to the cell under the control of the radio base station Node B increases and the interference volume (for example, noise rise) in the uplink exceeds an allowable value (for example, maximum allowable noise rise), the scheduling section 12313. lowers the maximum allowable transmission rate so that the interference volume in the uplink can fall within a range of the allowable value (see, FIG. 3).

On the other hand, when the interference volume (for example, noise rise) in the uplink falls within the range of the allowable value (for example, maximum allowable noise rise) and there is a space therein in the case when transmission of the user data in the mobile station UE connected to the cell under the control of the radio base station Node B is completed, or the like, the scheduling section 12313 again increases the maximum allowable transmission rate (see, FIG. 3).

The radio network controller RNC according to this embodiment is an apparatus located in an upper level of the radio base station Node B, and is configured to control radio communications between the radio base station Node B and the mobile station UE.

As shown in FIG. 12, the radio network controller RNC according to this embodiment is provided with an exchange interface 51, a Radio Link Control (RLC) layer processing section 52, a MAC layer processing section 53, a media signal processing section 54, a radio base station interface 55, and a call control section 56.

The exchange interface 51 is an interface with an exchange 1, and is configured to forward the downlink signals transmitted from the exchange 1 to the RLC layer processing section 52, and to forward the uplink signals transmitted from the RLC layer processing section 52 to the exchange 1.

The RLC layer processing section 52 is configured to perform an RLC sub-layer processing such as a combining processing of a header such as a sequence number or a trailer.

The RLC layer processing section 52 is also configured to transmit the uplink signals to the exchange interface 51 and to transmit the downlink signals to the MAC layer processing section 53, after the RLC sub-layer processing is performed.

The MAC layer processing section 53 is configured to perform a MAC layer processing such as a priority control processing or a header granting processing.

The MAC layer processing section 53 is also configured to transmit the uplink signals to the RLC layer processing section 52 and to transmit the downlink signals to the radio base station interface 55 (or a media signal processing section 54), after the MAC layer processing is performed.

The media signal processing section 54 is configured to perform a media signal processing against voice signals or real time image signals.

The media signal processing section 54 is also configured to transmit the uplink signals to the MAC layer processing section 53 and to transmit the downlink signals to the radio base station interface 55, after the media signal processing is performed.

The radio base station interface 55 is an interface with the radio base station Node B. The radio base station interface 55 is configured to forward the uplink signals transmitted from the radio base station Node B to the MAC layer processing section 53 (or the media signal processing section 54) and to forward the downlink signals transmitted from the MAC layer processing section 53 (or the media signal processing section 54) to the radio base station Node B.

The call control section 56 is configured to perform a radio resource control processing, a channel setup and open processing by the third layer signaling, or the like.

Here, the radio resource control processing includes a call receive control processing, a handover processing, or the like.

Specifically, the call control section 56 is configured to determine whether or not to perform the serving cell change, based on the measured reports from the mobile station UE and the measured reports from the radio base station Node B, and the like.

When determined to perform the serving cell change, the call control section 56 is configured to instruct to change the serving cell of the mobile station UE, to the mobile station UE.

In such a case, the call control section 56 can be configured to notify the timing of performing the serving cell change of the mobile station UE.

Further, the call control section 56 is configured to notify the serving cell change maximum allowable transmission rate to be used during the serving cell change, to the mobile station UE which changes the serving cell, using the layer-3 message, based on resource allocation condition of the changed serving cell which is connected to the mobile station UE after the serving cell change, a throughput in the uplink, and the like.

### (operations of Mobile Communication System According to First Embodiment of the Present Invention)

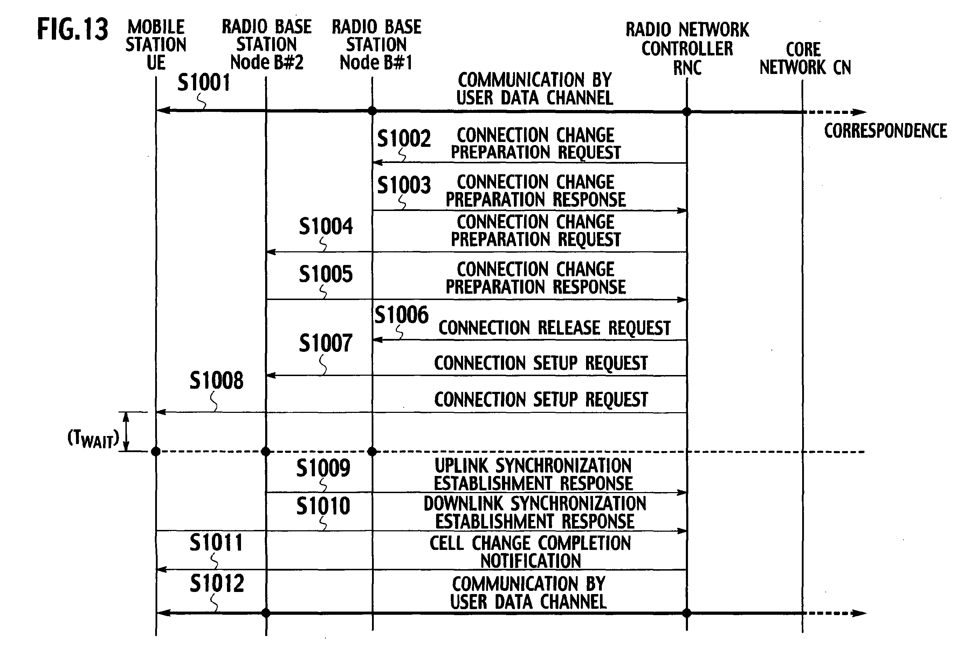

Referring to FIG. 13, operations when a serving cell change is performed in the mobile station UE according to the mobile communication system of the first embodiment in the present invention are described below.

Specifically, FIG. 13 shows a serving cell change when a serving cell of the mobile station UE is changed from one cell under the control of a radio base station Node B #1 to another cell under the control of a radio base station Node B #2.

As shown in FIG. 13, in step S1001, the mobile station UE is connected to the radio base station Node B #1, and performs communication through a user data channel.

Here, the mobile station UE controls a transmission rate of uplink user data, based on an absolute value of the maximum allowable transmission rate which is notified by the E-AGCH transmitted from the serving cell of the mobile station UE, a relative value of the maximum allowable transmission rate which is notified by the E-RGCH transmitted from the serving cell of the mobile station UE, and a relative value of the maximum allowable transmission rate which is notified by the E-RGCH transmitted from the non-serving cell of the mobile station UE.

The serving cell of the mobile station UE can transmit a common E-AGCH to mobile stations UE under the control of the serving cell, and can transmit a dedicated E-AGCH to each mobile station UE under the control of the serving cell.

In step S1002, when determined to start the serving cell change, the radio network controller RNC transmits a connection change preparation request which instruct to prepare the serving cell change of the mobile station UE, to a radio base station Node B #1.

In step S1003, the radio base station Node B #1 performs the preparation for responding the connection change preparation request, and transmits a connection change preparation response which notifies the completion of the preparation to the radio network controller RNC.

In step S1004, the radio network controller RNC transmits a connection change preparation request which instruct to prepare the serving cell change of the mobile station UE, to a radio base station Node B #2.

In step S1005, the radio base station Node B #2 performs the preparation for responding the connection change preparation request, and transmits a connection change preparation response which notifies the completion of the preparation to the radio network controller RNC.

In step S1006, the radio network controller RNC transmits a connection release request for releasing the connection between the mobile station UE and the radio base station Node B #1, to the radio base station Node B #1.

In steps S1007 and S1008, the radio network controller RNC transmits a connection setup request for setting up the connection between the mobile station UE and the radio base station Node B #2, to both of the mobile station UE and the radio base station Node B #2.

Here, the mobile station UE controls the maximum allowable transmission rate of uplink user data without following a "Up Command" included in the E-RGCH which is transmitted from the current serving cell connecting to the mobile station UE, between a timing when the mobile station UE. receives the connection setup request from the radio network controller RNC and a timing when the serving cell change of the mobile station UE is completed.

In addition, during the above period, the mobile station UE controls a transmission rate of uplink user data based on the serving cell change maximum allowable transmission rate to be used during the process of changing the serving cell, which is notified from the radio network controller RNC by using the layer-3 message.

The radio network controller RNC can notify the serving cell change maximum allowable transmission rate to the mobile station UE by the connection setup request, and can notify the serving cell change maximum allowable transmission rate to the mobile station UE in a different way from the connection setup request.

In step 51009, the radio network controller RNC receives an uplink synchronization establishment response from the radio base station Node B #2 including the changed serving cell connecting to the mobile station UE after the serving cell is changed.

In step S1010, the radio network controller RNC receives a downlink synchronization establishment response from the mobile station UE that changes the serving cell.

In step S1011, the radio network controller RNC transmits a cell change completion notification (a layer-3 message) for notifying the completion of the serving cell change, to the mobile station UE.

In step S1012, the communication through the user data channel, which is set up between the mobile station UE and the radio base station Node B #2, starts.

Then, the mobile station UE resumes the control of transmission rate of uplink user data based on an increase Command of the maximum allowable transmission rate ("Up Command") included in the E-RGCH which is transmitted from the changed serving cell.

### (Actions and Effects of Mobile Communication System According to First Embodiment of the Present Invention)

According to the mobile communication system in accordance with the first embodiment of the present invention, it becomes possible to prevent deterioration of radio communication quality by the shortage of processing radio resource in the changed serving cell even when the serving cell change is performed.

Further, according to the mobile communication system in accordance with the first embodiment of the present invention, it becomes possible to improve the lowering of transmission rate of uplink user data before the serving cell change, as the mobile station UE can control the transmission rate of uplink user data within the range of the maximum allowable transmission rate which is notified from the radio network controller RNC using the layer-3 message, even between a timing when the mobile station UE receives the connection setup request from the radio network controller RNC and a timing when the mobile station UE receives the notification of completion of serving cell change.

The present invention can provide a transmission rate control method, a mobile station and a radio network controller, which enable to prevent deterioration of radio communication quality by the shortage of processing radio resource in the changed serving cell even when the serving cell change is performed.

Additional advantages and modifications will readily occur to those skilled in the art. Therefore, the invention in its broader aspects is not limited to the specific details and the representative embodiments shown and described herein. Accordingly, various modifications may be made without departing from the scope of the general inventive concept as defined by the appended claims and their equivalents.

## Claims

1. A transmission rate control method for controlling a transmission rate of uplink user data transmitted by a mobile station, based on a maximum allowable transmission rate, comprising:
instructing, at a radio network controller, to change a serving cell of the mobile station, to the mobile station; and
controlling, at the mobile station, the maximum allowable transmission rate without following an increase command of the maximum allowable transmission rate which is notified from a current serving cell to which the mobile station is connected, between a timing when the mobile station receives the instruction from the radio network controller and a timing when a change process of changing the serving cell of the mobile station is completed.

2. The transmission rate control method according to claim 1, further comprising:
notifying, at the radio network controller, a serving cell change maximum allowable transmission rate to be used during the change process, to the mobile station, by using a layer-3 message;
controlling, at the mobile station, the transmission rate of uplink user data based on the serving cell change maximum allowable transmission rate, between the timing when the mobile station receives the instruction from the radio network controller and the timing when the change process is completed; and
resuming the control of the transmission rate of uplink user data based on the maximum allowable transmission rate which is notified from a changed serving cell to which the mobile station is newly connected, when the change process is completed.

3. The transmission rate control method according to claim 1, wherein the radio network controller notifies a timing of changing the serving cell of the mobile station as well as the instruction to change the serving cell of the mobile station, to the mobile station.

4. A mobile station for controlling a transmission rate of uplink user data based on a maximum allowable transmission rate, comprising:
a maximum allowable transmission rate control section configured to control the maximum allowable transmission rate without following an increase Command of the maximum allowable transmission rate which is notified from a current serving cell to which the mobile station is connected, between a timing when the mobile station receives the instruction from the radio network controller and a timing when a change process of changing the serving cell of the mobile station is completed.

5. The mobile station according to claim 4, comprising:
a transmission rate control section configured to control the transmission rate of uplink user data based on a serving cell change maximum allowable transmission rate to be used during the change process, the serving cell change maximum allowable transmission rate being notified from the radio network controller using a layer-3 message, between the timing when the mobile station receives the instruction from the radio network controller and the timing when a change process of changing the serving cell of the mobile station is completed, and to resume the transmission rate of uplink user data based on an increase Command of maximum allowable transmission rate which is notified from a changed serving cell to which the mobile station is newly connected, when the change process is completed.

6. The mobile station according to claim 4, wherein the maximum allowable transmission rate control section is configured to receive a timing of changing the serving cell of the mobile station as well as the instruction to change the serving cell of the mobile station, from the radio network controller.

7. A radio network controller used in a transmission rate control method for controlling a transmission rate of uplink user data to be transmitted by a mobile station, based on a maximum allowable transmission rate, comprising:
a maximum allowable transmission rate notification section configured to notify a serving cell change maximum allowable transmission rate to be used during a change process of changing the serving cell of the mobile station, to the mobile station by using a layer-3 message.
